# EUROPEAN PATENT SPECIFICATION

(11) **EP 3 703 226 B1**
(45) Date of publication and mention of the grant of the patent: **13.07.2022**
(21) Application number: 20159241.7
(22) Date of filing: 25.02.2020
(51) Int. Cl.: H02K 1/2786, H02K 5/173, H02K 11/33, B65H 54/42, B65H 54/46, H02K 21/22

(54) **WINDING ROLLER WITH DRIVING STRUCTURE AND TEXTILE MACHINE USING THE SAME**
WICKELROLLE MIT ANTRIEBSSTRUKTUR UND TEXTILMASCHINE DAMIT
ROULEAU D'ENROULEMENT COMPORTANT UNE STRUCTURE D'ENTRAÎNEMENT ET MACHINE TEXTILE L'UTILISANT

(30) Priority: 27.02.2019 CN 201910147776
(43) Date of publication of application: 02.09.2020
(73) Proprietor: Saurer (Jiangsu) Textile Machinery Co. Ltd., 215024 Suzhou Jiangsu Province (CN)
(72) Inventor: Wu, Yunfeng, Suzhou, Jiangsu 215001 (CN)
(74) Representative: Morgenthum-Neurode, Mirko

(56) References cited:
- EP-A1- 1 475 340
- WO-A1-99/65134
- CN-U- 207 265 846
- CN-U- 207 652 221
- US-A1- 2008 308 392
- US-A1- 2018 248 437

## Description

The present invention relates to the field of textile machines, and particularly to an improvement of winding rollers of a textile machine.

The existing textile machine, such as a rotor spinning machine, a twisting machine and a vortex spinning machine, usually each comprises a plurality of spinning stations arranged side by side, wherein each station comprises an independent processing unit (e.g., a spinner, a twisting spindle, and the like) for processing yarns, and usually each station finally winds the yarns on an empty paper tube (bobbin) to form a yarn package, while an empty bobbin is generally driven to rotate by a winding roller in contact with the empty bobbin. In the existing textile machine, the winding rollers for driving the bobbins to rotate at a plurality of stations are usually connected and collectively driven by a single shaft. However, during this collective driving, once a yarn breakage or other conditions occur in a station and the spinning is stopped, the winding roller at that station still rotates normally since it is connected to other stations and driven collectively. On the one hand, the energy consumption is increased due to the idling of the winding roller, and on the other hand, since the winding roller still rotates normally, a broken yarn may wind around the driving roller, while the centralized driving is adverse to a separate control of each station and cannot drive and adjust a single spindle.

Thus, it is necessary to improve the driving of the winding roller of the existing textile machine.

Documents CN 207 652 221 U and EP 1 475 340 A1 provide examples of winding rollers for textile machines.

An objective of the present invention is to provide a winding roller for driving a yarn bobbin for a textile machine.

Another objective of the present invention is to provide a textile machine using an independent winding roller to separately drive a yarn bobbin at each station.

In order to achieve the above objective, the present invention provides a winding roller as defined in claim 1.

According to one embodiment of the present invention, the motor stator comprises magnetic steel and a stator coil wound on the magnetic steel, and the motor stator is fixed by means of press-fitting, riveting, welding or fasteners, on a stator shaft sleeve disposed to sleeve the fixed shaft.

According to one embodiment of the present invention, the winding roller motor comprises a speed measuring unit, which comprises a speed measuring circuit board and a speed measuring element mounted on the speed measuring circuit board, and the speed measuring circuit board is fixed on a speed measuring shaft sleeve disposed to sleeve the fixed shaft.

In order to achieve another objective, the present invention provides a textile machine, comprising a plurality of spinning stations arranged side by side, each station comprising a bobbin for winding yarns and a winding roller for driving the bobbin to rotate, the bobbin at each spinning station is separately driven by an independent winding roller which is the winding roller as mentioned above.

The winding roller of the textile machine of the present invention is a winding roller motor formed by a drum casing with a built-in motor, and the yarn bobbin at each station is separately driven by this winding roller with a built-in motor, so as to prevent the situation that the yarn bobbins at all of the existing stations are collectively driven and the winding rollers continuously idle when a certain station is failed, and the winding quality at each station can be flexibly controlled. The driving circuit board of the stator of the winding roller motor is disposed outside the drum casing, which can avoid the influence on the control circuit by the heat generated by the coil of the motor stator and reduce the probability of motor failure.
Fig. 1 is a partial structural diagram of a single station of a textile machine according to an embodiment of the present invention.
Fig. 2 is a cross-sectional structural diagram of a winding roller of a textile machine according to an embodiment of the present invention.
Fig. 3 is a structural diagram of a fixed shaft of a winding roller of a textile machine according to an embodiment of the present invention.
Fig. 4 is a structural diagram of a motor stator of a winding roller of a textile machine according to an embodiment of the present invention.
Fig. 5 is a structural diagram of an end cap of a winding roller of a textile machine according to an embodiment of the present invention.
Fig. 6 is a structural diagram of a motor rotor of a winding roller of a textile machine according to an embodiment of the present invention.
Fig. 7 is a structural diagram of a speed measuring magnetic ring of a winding roller of a textile machine according to an embodiment of the present invention.
Fig. 8 is a cross-sectional structural diagram of a winding roller of a textile machine according to another embodiment of the present invention.
Fig. 9 is a structural diagram of a rotating part of a speed measuring unit of a winding roller of a textile machine according to another embodiment of the present invention.
Fig. 10 is a cross-sectional structural diagram of a winding roller of a textile machine according to still another embodiment of the present invention.
Fig. 11 is a structural diagram of an end cap of a winding roller of a textile machine according to an embodiment of the present invention.
Fig. 12 is a cross-sectional structural diagram of a winding roller of a textile machine according to an embodiment outside the scope of the present invention.
Fig. 13 is a cross-sectional structural diagram of a winding roller of a textile machine according to an embodiment outside the scope of the present invention.
Fig. 14 is a cross-sectional structural diagram of a winding roller of a textile machine according to an embodiment outside the scope of the present invention.

The present invention is directed to a textile machine, which uses a winding roller to drive a bobbin to rotate so as to wind yarns onto the bobbin, such as a rotor spinning machine, a twisting machine, an air-jet vortex spinning machine, etc., and the structure of the present invention will be described below using only a rotor spinning machine as an example.

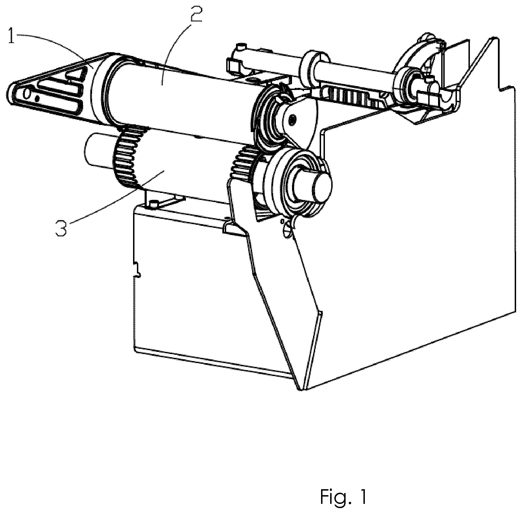

The rotor spinning machine of the present invention comprises a plurality of rows of identical stations arranged side by side, and please refer to Fig. 1, which illustrates only a partial structural diagram of a single station of the rotor spinning machine of the present invention. Each station comprises a cradle 1 for holding a bobbin, a bobbin 2 held between the cradles 1 to wind a yarn, and a winding roller 3 in contact with the bobbin 2 to drive the bobbin to rotate.

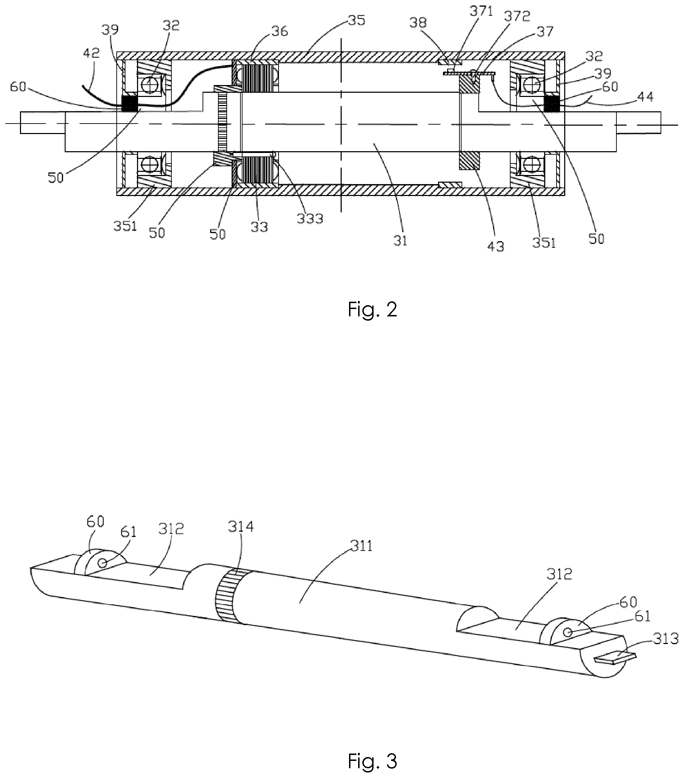

As mentioned above, in the existing rotor spinning machine, the winding rollers of a plurality of stations are driven by one shaft to rotate simultaneously, while in the textile machine of the present invention, the winding roller 3 of each station is a winding roller motor that can be driven separately. Please refer to Fig. 2, which illustrates a cross-sectional structural diagram of a winding roller 3 of a textile machine according to a first embodiment of the present invention. In this embodiment, the winding roller 3 of the present invention mainly comprises a fixed shaft 31, two bearings 32 disposed to sleeve both ends of the fixed shaft 31, a motor stator 33 and a driving circuit board 34 of the motor stator fixed on the fixed shaft, a drum casing 35 mounted outside outer rings of the bearings, a motor rotor 36 mounted on an inner wall of the drum casing 35 and corresponding to the motor stator 33, a speed measuring circuit board 37 fixed on the fixed shaft, a speed measuring magnetic ring 38 mounted on the inner wall of the drum casing 35 and corresponding to the speed measuring circuit board 37, and end caps 39 disposed on the fixed shaft 31 at the outer side of the two bearings 32 to close the drum casing 35.

Please still refer to Fig. 2 and in conjunction with Fig. 3, wherein the fixed shaft 31 comprises a cylindrical middle section 311 with a larger diameter in a middle thereof, cut-out sections 312 extending from the middle section 311 to both sides, with surfaces partially cut off along a longitudinal direction of the fixed shaft, and fixed sections 313 extending from the cut-out sections 312, wherein knurling 314 is provided at the middle section of the fixed shaft close to one end.

Please still refer to Fig. 2, one end of the middle section of the fixed shaft 31 is press-fitted with a stator shaft sleeve 41, which is press-fitted at a position in the middle section 311 of the fixed shaft 31 where the knurling 314 is provided.

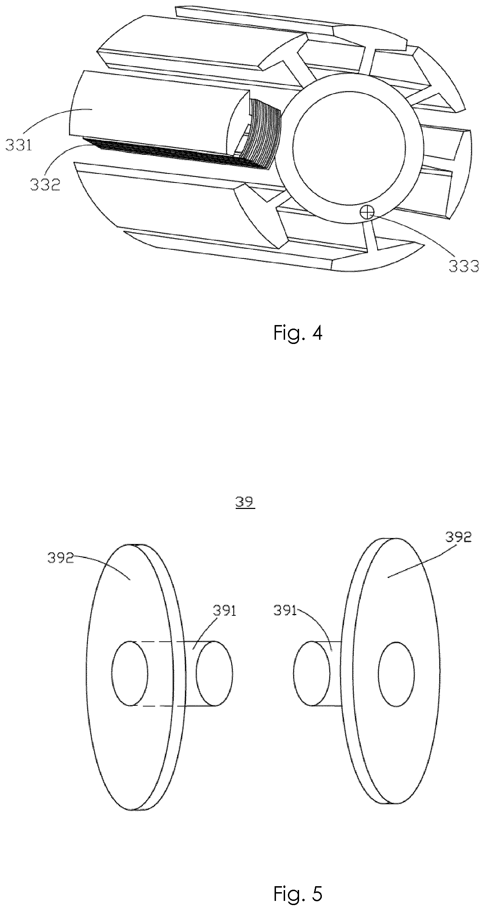

Please refer to Figs. 2 and 4, the motor stator 33 comprises magnetic steel 331 and a stator coil 332 wound on the magnetic steel 331; at least one screw 333 penetrating the magnetic steel 331 in a longitudinal direction is provided on the magnetic steel 331 of the motor stator, and the motor stator 33 is fixed on the stator shaft sleeve 41 by the screw 333.

The stator shaft sleeve 41 is fixed with an annular driving circuit board 34 of the motor stator for controlling the energization of the stator coil 332; one end of the annular driving circuit board 34 of the motor stator is connected to the motor stator coil 332, and the other end is connected to a control unit (not illustrated) outside the motor through a lead 42.

Please still refer to Fig. 2, the other end of the middle section of the fixed shaft 31 is provided with a speed measuring shaft sleeve 43, which is press-fitted and fixed on the fixed shaft 31; an outer surface of the speed measuring shaft sleeve 43 is fixed with a speed measuring circuit board 37 by a screw; and the speed measuring circuit board 37 is provided with a speed measuring element 371 and is connected to a control unit (not illustrated) outside the motor through a lead 44. Since the stator coil of the motor stator generates heat after being energized, the speed measuring unit is disposed at a position far away from the motor stator, so that the speed measuring effect of the speed measuring unit can be prevented from being influenced by the heat generated by the motor stator; and the specific far-away position depends on the power, the heat generation condition of the motor stator, etc., so long as the heat generated by the motor stator does not influence the speed measurement of the speed measuring unit.

Please still refer to Figs. 2 and 3, wherein a diameter of the inner race of the bearing 32 disposed to sleeve the fixed shaft 31 is equivalent to a diameter of the middle section 311 of the fixed shaft 31. Please refer to Fig. 2, the two bearings 32 are disposed to sleeve the cut-out sections 312 of the fixed shaft 31, respectively; since the cut-out section 312 of the fixed shaft 31 is obtained by cutting out a part of a shaft body from the cylindrical middle section 311, a gap 50 is formed between the inner race of the bearing 32 and the cut-out section 312 of the fixed shaft, so that the lead 42 of the driving circuit board 34 of the motor stator and the lead 44 of the speed measuring circuit board 37 can pass through the gap 50 between the bearing 32 and the fixed shaft 31. A bearing seat 351 is fixed between the outer ring of the bearing 32 and the inner wall of the drum casing 35 of the winding roller, and the outer ring of the bearing 32 is connected fixedly to the inner wall of the drum casing 35 through the bearing seat 351.

Please still refer to Figs. 2 and 3, the cut-out section of the fixed shaft 31 is provided with a semi-circular seal 60 which, together with the cut-out section 312 of the fixed shaft 31, just form a cylinder with a diameter equivalent to the diameter of the complete cylinder of the middle section 311 of the fixed shaft 31; the seal 60 may be made of plastics or plastic cement, and the seal 60 is provided with an opening 61 through which a lead can pass.

At both ends of the fixed shaft 31 of the winding roller 3, two end caps 39 are press-fitted at the outer side of the bearing 32; please refer to Figs. 5 and 2, each end cap 39 comprises a shaft sleeve section 391 disposed to sleeve the fixed shaft, and a drum sealing section 392 for sealing the drum casing which extending vertically from an edge of the shaft sleeve section 391; the cross sections of the two end caps 39 are L-shaped, with a diameter of the shaft sleeve section 391 equivalent to the diameter of the middle section 311 of the fixed shaft, i.e., the diameter of the cylinder formed by the seal 60 and the cut-out section 312 of the fixed shaft, and a diameter of the drum sealing section 392 equivalent to a diameter of an inner wall of the drum casing 35.

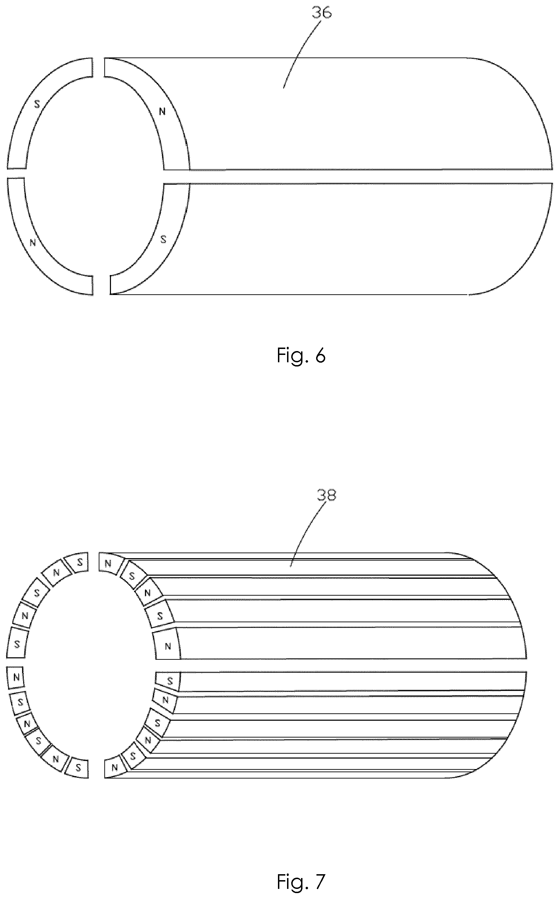

Please refer to Figs. 6 and 2, a motor rotor magnetic ring composed of a circle of N-pole and S-pole magnetic strips made of permanent magnets arranged at intervals is provided on the inner wall of the drum casing 35 of the winding roller at a position corresponding to the stator coil on the fixed shaft 31. A magnetic ring composed of two N-pole magnetic strips and two S-pole magnetic strips is illustrated in this embodiment. In other embodiments, a magnetic ring composed of different numbers of magnetic strips may also be provided according to the specific requirement of the motor. For example, in the previous embodiment, one motor rotor magnetic ring is provided, and in other embodiments, two or more magnetic rings may also be provided to expand more motor components.

Referring to Figs. 7 and 2, a motor speed measuring magnetic ring 38 composed of a circle of N-pole and S-pole magnetic strips made of permanent magnets arranged at intervals is provided on the inner wall of the drum casing 35 of the winding roller at a position corresponding to the speed measuring circuit board 37 on the fixed shaft 31. Since the accuracy requirements for the speed measurement and the driving circuit are different, the number of N-pole and S-pole magnetic strips in the motor speed measuring magnetic ring 38 is greater than the number of N-pole and S-pole magnetic strips in the motor rotor magnetic ring 36. In other embodiments, the number of detection elements of the speed measuring component 38 may be adjusted based on the accuracy.

Please refer to Fig. 2, during the assembly, the motor stator shaft sleeve 41 is mounted at one end of the middle section of the fixed shaft 31 by means of press-fitting, riveting, welding or fasteners. The motor stator 33 is fixed on the stator shaft sleeve 41 by the screws 333. In other embodiments, the motor stator 33 may also be fixed on the stator shaft sleeve 41 by means of press-fitting, riveting, welding or fasteners. The driving circuit board 34 of the motor stator is fixed on the stator shaft sleeve 41 and connected to the motor stator coil 332 electrically with the lead 42. The motor speed measuring shaft sleeve 43 is mounted at the other end of the middle section 312 of the fixed shaft 31 fixedly by means of press-fitting, riveting, welding or fasteners. The motor speed measuring circuit board 34 is fixed on the speed measuring shaft sleeve 43 by the screws 372, and a speed measuring element 371 is fixed on the speed measuring circuit board 37 and is connected to the speed measuring circuit board 37 with the lead 44. The motor rotor magnetic ring 36 and the speed measuring magnetic ring 38 are provided on the inner wall of the drum casing 35 of the winding roller respectively at a certain distance. When the fixed shaft 31 is inserted into the drum casing, a position of the motor stator coil 332 is corresponding to a position of the motor rotor magnetic ring 36, and a position of the speed measuring element 371 on the speed measuring circuit board 37 is corresponding to a position of the speed measuring magnetic ring 38. The two bearings 32 are mounted at the cut-out sections 312 of the fixed shaft 31, respectively, wherein the inner race of the bearing 32 is disposed to sleeve the cut-out section 312 of the fixed shaft, and the outer ring of the bearing 32 is fixed with the bearing seat 351 on the inner wall of the drum casing. The end cap 39 of the drum casing 35 is disposed to sleeve the cut-out section 312 of the fixed shaft 31, and the seal 60 is mounted between the shaft sleeve section 391 of the end cap and the cut-out section 312 of the fixed shaft to seal the end cap 39, wherein the lead 42 connected to the stator driving circuit board 34 passes through the gap 50 between the inner race of the bearing and the cut-out section 312 of the fixed shaft, then passes through the opening 61 of the seal 60 and runs out of the end cap 39 to extend out of the drum casing 35. The lead 44 connected to the speed measuring circuit board 37 passes through the gap 50 between the inner race of the bearing at the other end and the cut-out section 312 of the fixed shaft, then passes through the opening of the seal 60 and runs out of the end cap 39 at the other end to extend out of the drum casing 35.

During operation, the lead 42 connected to the driving circuit board 34 of the motor stator coil of the winding roller is connected to an external control circuit. After being energized, the motor stator coil 332 generates a magnetic field which interacts with a magnetic field of the motor rotor magnetic ring 36 on the inner wall of the drum casing 35 to drive the motor rotor 36 to rotate, thereby causing the drum casing 35 to rotate. The rotation of the drum casing 35 drives the yarn bobbin 2 in contact with the winding roller 3 to rotate, so as to wind the yarn onto the yarn bobbin, wherein the speed measuring element 371 mounted on the speed measuring circuit board 371 is a Hall element, which calculates a rotation speed of the winding roller motor by sensing a state change of the speed measuring component 38. The speed measuring circuit board 37 is connected to the external control circuit through the lead 44, and the external control circuit can adjust and control the speed of the winding roller according to a deviation between the rotation speed of the winding roller measured by the speed measuring unit and a set-speed.

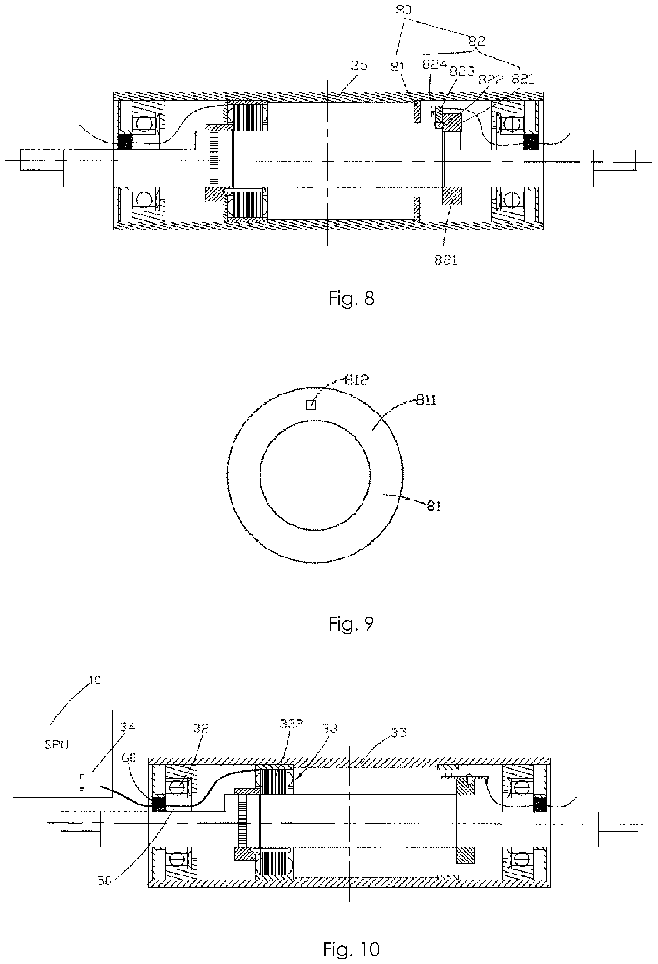

Please refer to Fig. 8, which illustrates a structural diagram of a second embodiment of the present invention. The difference between the second embodiment and the above first embodiment is that the structure of the speed measuring unit of the winding roller motor and the speed measuring method in this embodiment are different from those in the first embodiment. In this embodiment, a rotating part and a fixed part of the speed measuring unit are oppositely disposed along a longitudinal direction of the fixed shaft. Specifically, please refer to Figs. 8 and 9, in the second embodiment, the speed measuring unit 8 of the winding roller motor comprises a rotating part 81 fixed with the drum casing and a fixed part 82 fixed with the fixed shaft, wherein the rotating part 81 comprises a circular ring 811 extending perpendicularly to the inner wall of the drum casing 35, and a magnet 812 is provided on the circular ring 811. The fixed part 82 comprises a speed measuring shaft sleeve 821 disposed to sleeve the fixed shaft 31, a speed measuring circuit board 823 fixed on the speed measuring shaft sleeve 821 by screws 822, and a speed measuring element 824 disposed on the speed measuring circuit board 823, wherein the speed measuring circuit board 823 is fixed on the speed measuring shaft sleeve 821 in a direction perpendicular to an axis of the fixed shaft, so that the speed measuring element 824 on the speed measuring circuit board 823 is aligned with the speed measuring element 812 on the circular ring 811 along a longitudinal axis of the fixed shaft 31. In this embodiment, the speed measuring element 824 is a Hall element, and the speed measuring element 812 is a magnet. When the magnet 812 on the circular ring rotates along with the drum casing 35, a distance between the magnet 812 and the Hall element 824 changes periodically, and a magnetic field generated by the magnet 812 changes periodically. The rotation speed of the drum casing 35 can be calculated from a signal change due to a state change sensed by the Hall element 824.

In the second embodiment, the magnet 812 is fixed on the circular ring, and the Hall element is mounted on the speed measuring circuit board 823. In other embodiments, the circular ring and the speed measuring circuit board can also use a photoelectric speed measuring sensor. The photoelectric speed measuring sensor may be obtained by providing a photoelectric tube on the speed measuring circuit board 823, and providing a reflective sheet 812 on the circular ring 811. The light emitted by the photoelectric tube is reflected by the reflective sheet 812 and then received by a receiving device on the speed measuring circuit board 823 to generate a periodic pulse signal, from which the rotation speed of the drum casing 35 can be calculated. Alternatively, an opening is provided on the circular ring, and a photoelectric emitting element and a photoelectric receiving element are provided on two sides of the circular ring, respectively; when the opening of the circular ring passes by the photoelectric element, light from the photoelectric emitting element irradiates the photoelectric receiving element through the opening; and when a non-opening part of the circular ring passes by the photoelectric element, light from the photoelectric emitting element is blocked from irradiating the photoelectric receiving element, while the rotation speed of the drum casing can be calculated from a light receiving frequency of the photoelectric receiving element. Alternatively, in other embodiments, any other type of sensor, such as a vortex proximity switch sensor or a capacitive proximity switch sensor may also be used for speed measurement, which will not be illustrated here.

Please refer to Fig. 10, which illustrates a structural diagram of a third embodiment of the present invention, and the difference between the third embodiment and the first embodiment is that in the third embodiment, a driving circuit board of the motor stator 33 is not provided inside the drum casing 35 of the winding roller motor. The driving circuit board 34 of the motor stator 33 is provided outside the drum casing 35 of the winding roller motor. The lead 42 is connected to an external driving circuit board 34 through the gap 50 between the bearing 32 and the cutout section 312 of the fixed shaft and the opening 61 of the seal 60 when it is connected to the stator coil 332, wherein the driving circuit board 34 of the motor stator coil 332 may also be integrated onto the control circuit board 10 of the whole machine.

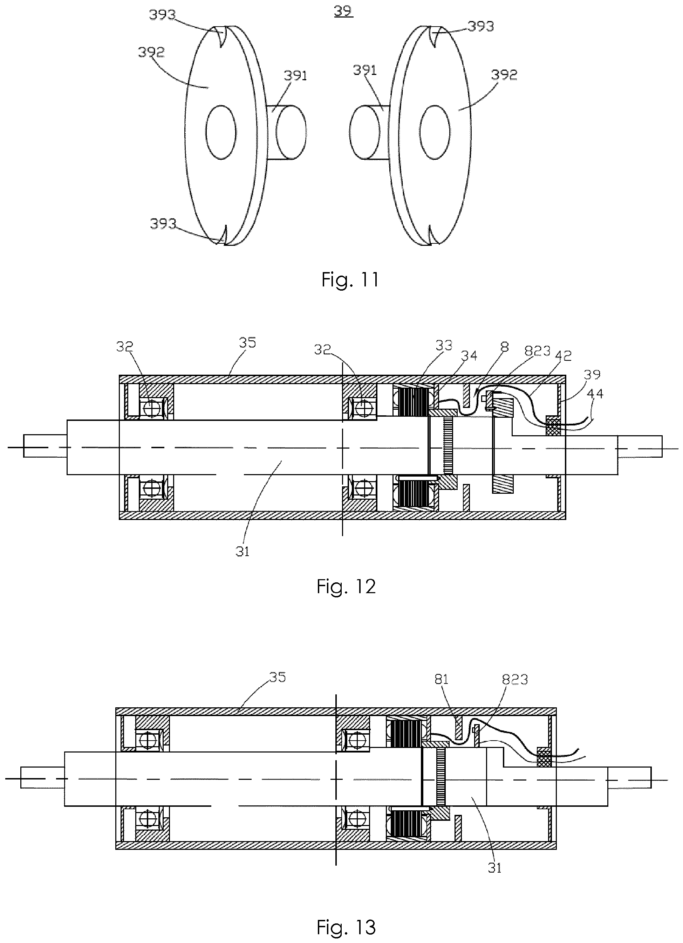

Please refer to Fig. 11, which illustrates a structural diagram of a fourth embodiment of the present invention. The difference between the fourth embodiment and the first embodiment is that in the fourth embodiment, the edge of the end cap 39 of the drum casing 35 of the winding roller motor is provided with a fan-blade shaped opening 393, i.e., an opening spirally and gradually changing inwards. The end cap 39 of the present invention is fixed together with the fixed shaft 31 and does not rotate. When the drum casing 35 rotates normally, the fan-blade shaped opening 393 rotates in a direction relative to the drum casing 35 so as to blow air out of the drum casing 35, so that on the one hand, heat generated in the winding roller motor can be discharged out of the drum casing 35, and on the other hand, hairy fibers entering the drum casing 35 through gaps can be removed from the interior of the drum casing 35. In the illustrated embodiment, only two opposing fan-blade shaped openings 393 are provided on each end cap 39, and in other embodiments, a plurality of fan-blade shaped openings may be provided along the edge of the end cap.

Please refer to Fig. 12, which illustrates a structural diagram of a fifth embodiment, which does not fall under the scope of the present invention. The difference between the fifth embodiment and the second embodiment is that in the fifth embodiment, the motor stator coil 33 and the speed measuring unit 8 are both located on one side of the two bearings 32 of the winding roller motor. In this way, the diameter of the inner race of either of the bearings 32 is equivalent to the diameter of the fixed shaft 31, and it is unnecessary to reserve a gap between the inner race of the bearing 32 and the fixed shaft for the lead to pass through. The lead 42 connected to the driving circuit board 34 of the motor stator and the lead 44 connected to the speed measuring circuit board 823 just need to pass through the end cap 39 at one end of the drum casing 35 only, thus the overall structure is simpler.

Please refer to Fig. 13, which illustrates a structural diagram of a sixth embodiment, which does not fall under the scope of the prsent invention.

The difference between this sixth embodiment and the fifth embodiment is that the speed measuring circuit board 823 is not fixed on the fixed shaft 31 through the speed measuring shaft sleeve. Instead, the speed measuring shaft sleeve is cancelled, and the speed measuring circuit board 823 is directly fixed on the fixed shaft 31.

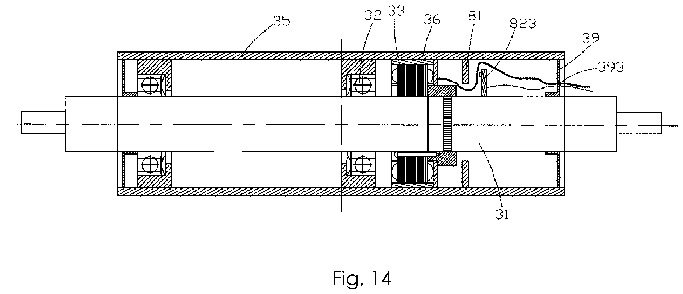

Please refer to Fig. 14, which illustrates a structural diagram of a seventh embodiment, which does not fall under the scope of the present invention.

In this embodiment, the stator 33 and the rotor 36 of the motor are located between the bearing 32 and the end cap 39 located on the outermost side along the longitudinal direction of the fixed shaft 31. The portion of the fixed shaft 31 inside the drum casing 35 is a complete cylinder, wherein the end cap 39 close to the motor is provided with an opening 393, and the lead 42 connected to the driving circuit board 34 of the motor stator and the lead 44 connected to the motor speed measuring circuit board 823 extend out of the drum casing through the opening 393 in the end cap 39.

The foregoing embodiments are merely exemplary descriptions made by the inventor to introduce the inventive points of the present invention. The structures of the above embodiments can also be combined with each other. For example, the fifth embodiment can be carried out in conjunction with the fourth embodiment in which the end cap is provided with fan-blade shaped opening. Alternatively, the solution of the sixth embodiment that the speed measuring circuit board is directly fixed on the fixed shaft can be combined with the solution of the second embodiment that the motor stator and the speed measuring unit are located between two bearings, and so on. In the foregoing embodiments, two bearings are provided at two ends of the drum casing, while in other embodiments, three or more bearings may be also provided inside the drum casing.

Those described above are just descriptions of some embodiments of the technical solutions of the present invention, and the inventor cannot illustrate all the embodiments one by one. The scope of the claims of the present invention is not limited to the aforementioned embodiments only.

## Claims

1. A winding roller (3) for driving a bobbin (2) to rotate, for a spinning station of
a textile machine, wherein the winding roller (3) comprises
a fixed shaft (31),
a bearing (32) mounted on the fixed shaft (31),
a drum casing (35),
end caps (39) at both ends of the drum casing (35),
a motor stator (33) fixed on the fixed shaft (31),
a rotor disposed on an inner wall of the drum casing (35) at a position corresponding to the motor stator (33), the rotor being a driving magnetic ring (36) along a circumference of the inner wall of the drum casing (35), and
a driving circuit board (34) of a coil (332) of the motor stator (33) being located outside the drum casing (35),
the drum casing (35) is disposed to sleeve the bearing (32), wherein the drum casing (35) is closed at both ends by the end caps (39), **characterized in that**
the rotor being composed of N-pole and S-pole magnetic strips arranged at intervals along the circumference of the inner wall of the drum casing (35),
the fixed shaft (31) comprises a middle section (311) in a middle thereof, and cut-out sections (312) extending from the middle section (311) to both sides with surfaces partially cut off along a longitudinal direction of the fixed shaft (31);
an inner race of the bearing (32) is disposed to sleeve the cut-out section (312) of the fixed shaft (31), whereby a gap (50) is formed between the inner race of the bearing (32) and the fixed shaft (31) so that a lead (42) of the motor stator (33) runs out,
the end cap (39) of the winding roller motor is disposed to sleeve the cut-out section (312) of the fixed shaft (31),
a seal (60) is disposed between the shaft sleeve section (391) of the end cap (39) and the fixed shaft (31), the seal (60) is provided with an opening (61), and
the lead (42) connected to the coil (332) of the motor stator (33) runs through the opening (61) on the seal (60) to be in connection with the driving circuit board (34) of the coil (332) of the motor stator (33).

2. The winding roller (3) according to claim 1, **characterized in that** the motor stator (33) comprises magnetic steel and the stator coil (332) wound on the magnetic steel, and the motor stator (31) is fixed by means of press-fitting, riveting, welding or fasteners, on a stator shaft sleeve (41) disposed to sleeve the fixed shaft (31).

3. The winding roller (3) according to claim 1, **characterized in that** the winding roller motor comprises a speed measuring unit, which comprises a speed measuring circuit board (37; 823) and a speed measuring element (371; 824) mounted on the speed measuring circuit board (37; 823), and the speed measuring circuit board (37; 823) is fixed on a speed measuring shaft sleeve (43; 821) disposed to sleeve the fixed shaft (31).

4. A textile machine, comprising a plurality of spinning stations arranged side by side, each station comprising a bobbin (2) for winding yarns and a winding roller (3) for driving the bobbin (2) to rotate, **characterized in that** the bobbin (2) at each spinning station is separately driven by an independent winding roller (3) according to any one of claims 1 to 3.

## Patentansprüche

1. Spulwalze (3) zum drehenden Antreiben einer Spule (2) für eine Spinnstelle einer Textilmaschine, wobei die Spulwalze (3) aufweist:
eine feststehende Welle (31),
ein Lager (32), das an der feststehenden Welle (31) angebracht ist,
ein Trommelgehäuse (35),
Endkappen (39) an beiden Enden des Trommelgehäuses (35),
einen Motorstator (33), der an der feststehenden Welle (31) angebracht ist,
einen Rotor, der an der Innenwand des Trommelgehäuses (35) an einer Position angeordnet ist, die dem Motorstator (33) entspricht, wobei der Rotor ein antreibender Magnetring (36) entlang einem Umfang der Innenwand des Trommelgehäuses (35) ist, und
eine Steuerplatine (34) einer Wicklung (332) des Motorstators (33), die sich außerhalb des Trommelgehäuses (35) befindet,
wobei das Trommelgehäuse (35) so angeordnet ist, dass es das Lager (32) umschließt, wobei das Trommelgehäuse (35) an beiden Enden durch die Endkappen (39) verschlossen ist,
**dadurch gekennzeichnet, dass**
der Rotor aus Nordpol- und Südpol-Magnetstreifen besteht, die in Abständen entlang des Umfangs der Innenwand des Trommelgehäuses (35) angeordnet sind,
die feststehende Welle (31) einen mittleren Abschnitt (311) in ihrer Mitte und ausgeschnittene Abschnitte (312) aufweist, die sich von dem mittleren Abschnitt (311) zu beiden Seiten erstrecken und deren Oberflächen entlang einer Längsrichtung der feststehenden Welle (31) teilweise ausgeschnitten sind;
ein innerer Laufring des Lagers (32) so angeordnet ist, dass er den ausgeschnittenen Abschnitt (312) der feststehenden Welle (31) umschließt, wobei ein Spalt (50) zwischen dem inneren Laufring des Lagers (32) und der feststehenden Welle (31) derart gebildet ist, dass ein Anschlussdraht (42) des Motorstators (33) nach außen verläuft,
die Endkappe (39) des Spulwalzenmotors so angeordnet ist, dass sie den ausgeschnittenen Abschnitt (312) der feststehenden Welle (31) umschließt,
eine Dichtung (60) zwischen dem umschlossenen Wellenabschnitt (391) der Endkappe (39) und der feststehenden Welle (31) angeordnet ist, wobei die Dichtung (60) mit einer Öffnung (61) versehen ist, und
der Anschlussdraht (42), der mit der Wicklung (332) des Motorstators (33) verbunden ist, durch die Öffnung (61) in der Dichtung (60) verläuft, um in Verbindung mit der Steuerplatine (34) der Wicklung (332) des Motorstators (33) zu stehen.

2. Spulwalze (3) nach Anspruch 1, **gekennzeichnet dadurch, dass** der Motorstator (33) magnetischem Stahl umfasst und die Statorwicklung (332) um den magnetischen Stahl gewickelt ist, und dass der Motorstator (31) durch Einpressen, Nieten, Schweißen oder mit Befestigungen an einer Statorwellen-Mantelhülse (41) befestigt ist, die so angeordnet ist, dass sie die feststehende Welle (31) umschließt.

3. Spulwalze (3) nach Anspruch 1, **gekennzeichnet dadurch, dass** der Spulwalzenmotor einen Drehzahlmesser umfasst, der eine Drehzahlmessplatine (37; 823) und ein Drehzahlmesselement (371; 824) aufweist, das an der Drehzahlmessplatine (37; 823) angebracht ist, und dass die Drehzahlmessplatine (37; 823) an einer Drehzahlmesswellen-Mantelhülse (43; 821) befestigt ist, die so angeordnet, ist, dass sie die feststehende Welle (31) umschließt.

4. Textilmaschine mit einer Vielzahl von nebeneinander angeordneten Spinnstellen, wobei jede Spinnstelle eine Spule (2) zum Spulen von Garnen und eine Spulwalze (3) zum drehenden Antreiben der Spule (2) umfasst, **dadurch gekennzeichnet, dass** die Spule (2) an jeder Spinnstelle separat von einer unabhängigen Spulwalze (3) nach einem der Ansprüche 1 bis 3 angetrieben ist.

## Revendications

1. Rouleau d'enroulement (3) pour entraîner la rotation d'une bobine (2), pour un poste de filage d'une machine textile, où le rouleau d'enroulement (3) comprend
un arbre fixe (31),
un palier (32) monté sur l'arbre fixe (31),
une enveloppe de tambour (35),
des capuchons d'extrémités (39) aux deux extrémités de l'enveloppe de tambour (35),
un stator de moteur (33) monté sur l'arbre fixe (31),
un rotor disposé sur une paroi intérieure de l'enveloppe de tambour (35) à une position correspondant au stator de moteur (33), le rotor étant un anneau d'entraînement magnétique (36) le long d'une circonférence de la paroi intérieure de l'enveloppe de tambour (35), et
un circuit imprimé d'entraînement (34) d'une bobine (332) du stator de moteur (33) situé à l'extérieur de l'enveloppe de tambour (35),
l'enveloppe de tambour (35) étant disposée de manière à manchonner le palier (32), où l'enveloppe de tambour (35) est fermée aux deux extrémités par des capuchons d'extrémité (39), **caractérisé en ce que**
le rotor est composé de bandes magnétiques à pôle N et à pôle S disposées à intervalles le long de la circonférence de la paroi intérieure de l'enveloppe de tambour (35),
l'arbre fixe (31) comprend une section médiane (311) en son milieu, et des sections de découpe (312) s'étendant de la section médiane (311) aux deux côtés, avec des surfaces partiellement découpées suivant une direction longitudinale de l'arbre fixe (31) ;
une bague intérieure du palier (32) est disposée de manière à manchonner la section de découpe (312) de l'arbre fixe (31), où un vide (50) se forme entre la bague intérieure du palier (32) et l'arbre fixe (31) de sorte qu'un fil (42) du stator de moteur (33) s'épuise,
le capuchon d'extrémité (39) du rouleau d'enroulement est disposé de manière à manchonner la section de découpe (312) de l'arbre fixe (31),
un joint (60) est disposé entre la section de manchon de l'arbre (391) du capuchon d'extrémité (39) et l'arbre fixe (31), le joint (60) étant doté d'une ouverture (61), et
le fil (42) relié à la bobine (332) du stator de moteur (33) traverse l'ouverture (61) du joint (60) pour être relié au circuit imprimé d'entraînement (34) de la bobine (332) du stator de moteur (33).

2. Le rouleau d'enroulement (3) selon la revendication 1, **caractérisé en ce que** le stator de moteur (33) comprend de l'acier magnétique et la bobine de stator (332) est enroulée sur l'acier magnétique, et le stator de moteur (31) est fixé au moyen d'un raccord, d'un rivetage, d'une soudure ou d'attaches, sur une protection d'arbre de stator (41) disposée de manière à manchonner l'arbre fixe (31).

3. Le rouleau d'enroulement (3) selon la revendication 1, **caractérisé en ce que** le moteur de rouleau d'enroulement comprend une unité de mesure de régime qui comprend un circuit imprimé de mesure de régime (37 ; 823) et un élément de mesure de régime (371 ; 824) monté sur le circuit imprimé de mesure de régime (37 ; 823), et le circuit imprimé de mesure de régime (37 ; 823) est fixé sur une protection d'arbre de mesure de régime (43 ; 821) disposée de manière à manchonner l'arbre fixe (31).

4. Une machine textile comprenant plusieurs postes de filage disposés côte à côte, chaque poste comprenant un bobine (2) pour bobiner les fils et un rouleau d'enroulement (3) pour entraîner la rotation de la bobine (2), **caractérisé en ce que** la bobine (2) sur chaque poste de filage est entraînée séparément par un rouleau d'enroulement (3) indépendant selon l'une des revendications 1 à 3.
